# EUROPEAN PATENT APPLICATION

(11) **EP 4 525 069 A1**
(43) Date of publication of application: **19.03.2025**
(21) Application number: 23866957.6
(22) Date of filing: 25.05.2023
(51) Int. Cl.: H01M 4/13

(54) **ELECTRODE SHEET AND BATTERY**

(30) Priority: 19.09.2022 CN 202222475302 U
(71) Applicant: Zhuhai CosMX Battery Co., Ltd., Zhuhai, Guangdong 519180 (CN)
(72) Inventor: ZHU, Yuqi, Zhuhai, Guangdong 519180 (CN); ZHOU, Qiao, Zhuhai, Guangdong 519180 (CN); LIU, Xin, Zhuhai, Guangdong 519180 (CN)
(74) Representative: Vossius & Partner Patentanwälte Rechtsanwälte mbB
(86) International application number: PCT/CN2023/096403
(87) International publication number: WO 2024/060660

(57) **Abstract**

The present application provides an electrode piece and a battery. The electrode piece of the present application includes a current collector, an active layer (1) and a first insulating layer (2); the first insulating layer (2) includes a first insulating main part (21) and a first extension part (22); in the first direction of the electrode piece, any surface of the current collector includes a first functional area and a second functional area connected to each other, the active layer (1) covers the first functional area, and the first insulating main part (21) covers the second functional area; in the second direction of the electrode piece, the first extension part (22) extends from at least part of the end surface of the first insulating main part (21) as a start and protrudes from the second functional area, the second direction and the first direction being perpendicular to each other. The electrode piece of the present application can improve the safety performance of the battery.

## Description

The present application claims priority to Chinese Patent Application No. 202222475302.7, filed with China National Intellectual Property Administration on September 19, 2022, entitled "ELECTRODE PIECE AND BATTERY", the content of which is hereby incorporated by reference in its entirety.

### TECHNICAL FIELD

The embodiments of the present application relate to the field of new energy technology, and particularly an electrode piece and a battery.

### BACKGROUND

At present, lithium-ion battery is usually prepared by a winding process or a lamination process. In the winding process or the lamination process, a hardware cutter is usually used to cut the electrode piece. However, burrs are prone to appearing on the edges of the current collector in the electrode piece obtained by cutting with a hardware cutter. During the preparation of the battery, the burrs can easily pierce the separator, causing a short circuit or even a fire in the battery.

### SUMMARY

Given this, embodiments of the present application provide an electrode piece. A first insulating layer of the electrode piece has a first extension part protruding from a current collector, and in the preparation process of a battery, the first extension part will reserve a space at the edge of the current collector to protect the edge of the current collector from being damaged or to prevent the edge of the current collector from coming into contact with other components (a separator), so as to improve the safety of the electrode piece.

The present application provides a battery, which includes the above-mentioned electrode piece and thus has excellent safety.

The present application provides an electrode piece, which includes a current collector, an active layer and a first insulating layer; where the first insulating layer includes a first insulating main part and a first extension part;
in a first direction of the electrode piece, any surface of the current collector includes a first functional area and a second functional area connected to each other, the active layer covers the first functional area, and the first insulating main part covers the second functional area;
in a second direction of the electrode piece, the first extension part extends from at least part of an end surface of the first insulating main part as a start and protrudes from the second functional area, the second direction and the first direction being perpendicular to each other.

For the electrode piece as described above, it further includes a second insulating layer, where at least part of the second insulating layer is arranged on at least part of a surface of the active layer away from the current collector.

For the electrode piece as described above, the second insulating layer includes a second insulating main part and a second extension part;
the second insulating main part covers the active layer, and the second extension part extends from at least part of an end surface of the second insulating main part as a start and protrudes from the current collector.

For the electrode piece as described above, in the second direction, a size of each first extension part is 5-100µm.

For the electrode piece as described above, in the second direction, a size of each second extension part is 5-100µm.

For the electrode piece as described above, the first extension part covers at least part of an end surface of the current collector.

For the electrode piece as described above, two surfaces of the current collector are each provided with the first insulating layer, and first extension parts of two first insulating layers are connected to each other.

For the electrode piece as described above, the second extension part covers at least part of an end surface of the active layer and/or the current collector.

For the electrode piece as described above, two surfaces of the current collector are each provided with the active layer, surfaces of two surface active layers away from the current collector are each provided with the second insulating layer, and second extension parts of two second insulating layers are connected to each other.

For the electrode piece as described above, in the second direction, at least part of an end surface of the current collector has a molten bead.

For the electrode piece as described above, a particle size of the molten beads is 10-20µm.

For the electrode piece as described above, the surface of the current collector further includes a tab area for setting a tab;
in the first direction, the tab area and the second functional area are connected to each other.

For the electrode piece as described above, a second edge of the first insulating main part extending in the second direction has the same size as a first edge of the active layer extending in the second direction, and the second edge coincides with the first edge;
a fourth edge of the first insulating main part extending in the second direction has the same size as a third edge of the tab extending in the second direction, and the fourth edge coincides with the third edge.

For the electrode piece as described above, a size of the second edge of the first insulating main part extending in the second direction is smaller than a size of the first edge of the active layer extending in the second direction, and the second edge coincides with the first edge;
a fourth edge of the first insulating main part extending in the second direction has the same size as a third edge of the tab extending in the second direction, and the fourth edge coincides with the third edge.

The present application provides a battery, which includes the electrode piece as described above.

The present application provides an electrode piece, and the first insulating layer of the electrode piece has a first extension part protruding from the current collector. During the preparation of the battery, the first extension part will reserve a space at the edge of the current collector to prevent the edge of the current collector from contacting with other components, thereby improving the safety of the electrode piece.

The present application provides a battery, which includes the above-mentioned electrode piece and thus has excellent safety.

### BRIEF DESCRIPTION OF DRAWINGS

In order to more clearly illustrate the embodiments of the present application or the technical solutions in the prior art, the drawings required for description of the embodiments or the prior art will be briefly introduced below. It is obvious that the drawings described below are some embodiments of the present application. For persons of ordinary skill in the field, other drawings can be obtained based on these drawings without any creative effort.
FIG. 1 is a schematic structure diagram of an electrode piece in a first embodiment of the present application.
FIG. 2 is an SEM image of an electrode piece in the first embodiment of the present application.
FIG. 3 is an energy dispersive spectrometer diagram of an electrode piece in the first embodiment of the present application.
FIG. 4 is another energy dispersive spectrometer diagram of the electrode piece in the first embodiment of the present application;
FIG. 5 is a schematic structure diagram of an electrode piece in a second embodiment of the present application.
FIG. 6 is an SEM image of an electrode piece in a third embodiment of the present application.
FIG. 7 is a schematic structure diagram of an electrode piece in a fourth embodiment of the present application.
FIG. 8 is an SEM image of an electrode piece in a fourth embodiment of the present application.
FIG. 9 is an SEM image at a tab of the electrode piece of the present application at a first viewing angle.
FIG. 10 is an SEM image at a tab of the electrode piece of the present application at a second viewing angle.

### Illustration of reference signs:

1: active layer; 2: first insulating layer; 3: second insulating layer; 4: tab area; 5: molten bead; 21: first insulating main part; 22: first extension part; 31: second insulating main part; 32: second extension part.

### DESCRIPTION OF EMBODIMENTS

In order to make the purpose, technical solutions, and advantages of the present application clearer, the technical solutions in the embodiments of the present application will be clearly and completely described below in combination with the drawings of the present application. Obviously, the described embodiments are only part of the embodiments of the present application, not all of the embodiments. Based on the embodiments in this application, all other embodiments obtained by those skilled in the art without any creative work shall fall within the scope of protection of this application.

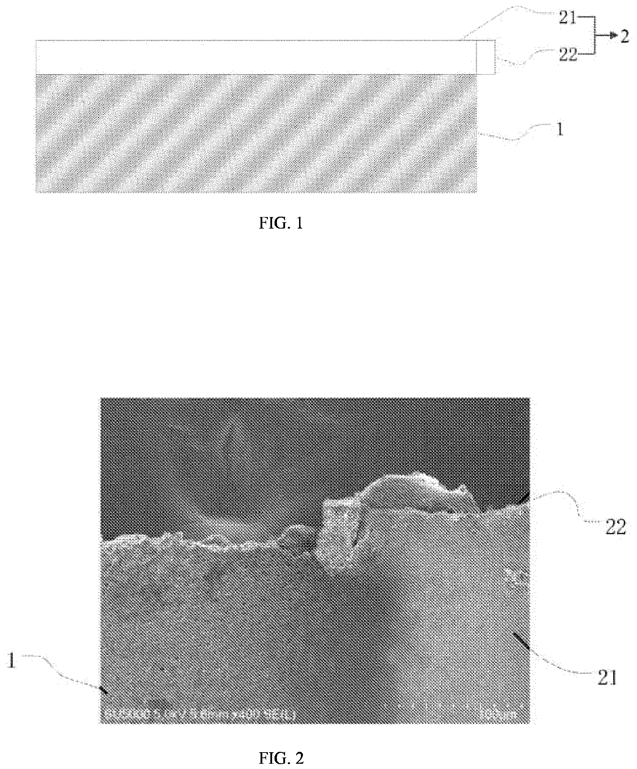

FIG. 1 is a schematic structure diagram of an electrode piece in a first embodiment of the present application. As shown in FIG. 1, the present application provides an electrode piece, including a current collector, an active layer 1 and a first insulating layer 2; the first insulating layer 2 includes a first insulating main part 21 and a first extension part 22;
in a first direction of the electrode piece, any surface of the current collector includes a first functional area and a second functional area connected to each other, the active layer 1 covers the first functional area, and the first insulating main part 21 covers the second functional area;
in a second direction of the electrode piece, the first extension part 22 extends from at least part of an end surface of the first insulating main part 21 as a start and protrudes from the second functional area, the second direction and the first direction being perpendicular to each other.

The electrode piece in the present application may be a positive electrode piece or a negative electrode piece. When the electrode piece is the positive electrode piece, the current collector is a positive electrode current collector, and the active layer 1 is a positive electrode active layer. When the electrode piece is the negative electrode piece, the current collector is a negative electrode current collector, and the active layer 1 is a negative electrode active layer.

The present application does not make any particular limitation on the first direction and the second direction of the electrode piece, as long as the first direction and the second direction are perpendicular to each other. In some embodiments, if the first direction is a length direction of the electrode piece, the second direction is a width direction of the electrode piece; if the first direction is the width direction of the electrode piece, the second direction is the length direction of the electrode piece. The technical solution of the present application is exemplified below by taking the first direction as the width direction of the electrode piece and the second direction as the length direction of the electrode piece as an example.

In the present application, the surface of the current collector refers to the two surfaces of the current collector that have the largest area and are arranged opposite to each other. It can be understood that in the first direction, one surface of the current collector of the present application may include a first functional area and a second functional area that are connected to each other; both surfaces of the current collector of the present application may each include the first functional area and the second functional area that are connected to each other. Hereinafter, one surface of the current collector is used for exemplary description.

In the present application, the active layer 1 covering the first functional area means that the orthographic projection of the active layer 1 in the first functional area completely coincides with the first functional area, and the first insulating main part 21 covering the second functional area means that the orthographic projection of the first insulating main part 21 in the second functional area completely coincides with the second functional area. It can be understood that in the first direction, the first insulating main part 21 and the active layer 1 are connected to each other. The present application does not limit the connection mode between the active layer 1 and the first insulating main part 21, as long as the first insulating main part 21 and the active layer 1 are connected to each other.

In the present application, the thickness of the first insulating main part 21 may be the same as or different from the thickness of the active layer 1.

In the present application, the active layer 1 is configured to ensure that the electrode piece can normally perform de-insertion and insertion of lithium ions and realize normal charging and discharging of the battery; the first insulating main part 21 is configured to prevent the active layer 1 and/or the current collector from contacting with the electrode piece with opposite electrical properties and causing a short circuit.

It can be understood that in the second direction, the first extension part 22 can extend from the entire end surface of the first insulating main part 21 as start and protrude from the current collector; the first extension part 22 can also extend from a portion of the end surface of the first insulating main part 21 as start and protrude from the current collector. The present application does not specifically limit the number of the first extension part 22, and the number of the first extension part 22 may be one or more.

In the present application, the first insulating layer 2 may be a ceramic insulating layer commonly used in the art. The first insulating main part 21 may be composed of conventional ceramics, and the first extension part 22 may include at least one of alumina, boehmite and graphite.

In the electrode piece of the present application, the first insulating layer 2 has a first extension part 22 protruding from the current collector. During the preparation of the battery, the first extension part 22 will reserve a space at the edge of the current collector to prevent the edge of the current collector from contacting with and damaging other components, thereby avoiding the phenomenon of battery short circuits caused by damage to other components and improving the safety of the battery.

In the present application, the electrode piece can be prepared by a method including the following steps:
1) placing an active slurry on the first functional area of the current collector by a conventional coating method, and drying to obtain an active layer 1;
   where the conventional coating method includes at least one of transfer coating, extrusion coating and curtain coating;
2) coating a ceramic slurry on an edge of the active layer 1 extending along a second direction, and drying to obtain a first insulating layer 2;
3) cutting the current collector arranged with the first insulating layer 2 and the active layer 1 with laser along a first direction to obtain the electrode piece of the present application;
in the process of cutting, the laser beam is irradiated on the surface of the electrode piece, and the energy generated causes the surface of the work piece to gasify or melt, thereby realizing the cutting process. At the same time, during the cutting process, the energy generated by the laser beam causes the first insulating layer 2 to sinter, thereby forming an electrode piece including the first extension part 22.

The present application does not specifically limit the laser, and the laser may include but is not limited to at least one of nanosecond laser, picosecond laser, and femtosecond laser.

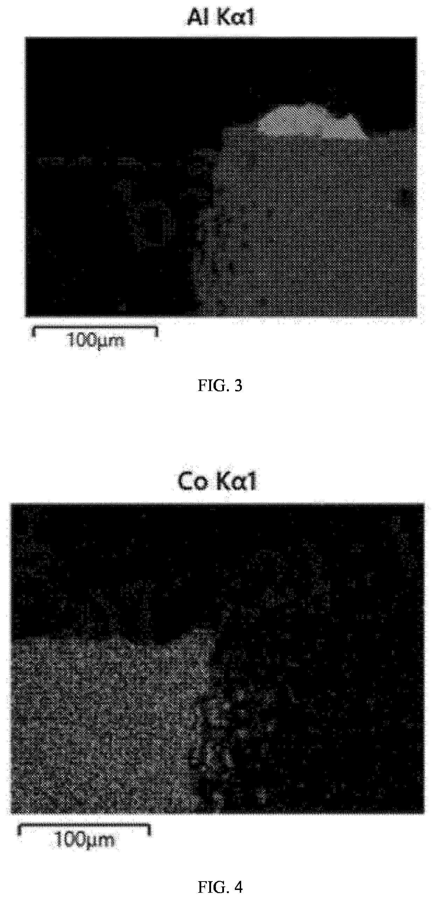

FIG. 2 is an SEM image of the electrode piece in the first embodiment of the present application; FIG. 3 is an energy dispersive spectrometer image of the electrode piece in the first embodiment of the present application; FIG. 4 is another energy dispersive spectrometer image of the electrode piece in the first embodiment of the present application. As can be seen from FIG. 2, the first insulating layer 2 of the present application includes a first extension part 22 and a first insulating main part 21, and the first extension part 22 protrudes from the current collector. As can be seen from FIG. 3 and FIG. 4, in the present application, a portion of the first insulating layer 2 protruding from the current collector has a higher distribution of Al elements, which proves that the first extension part 22 includes aluminum oxide.

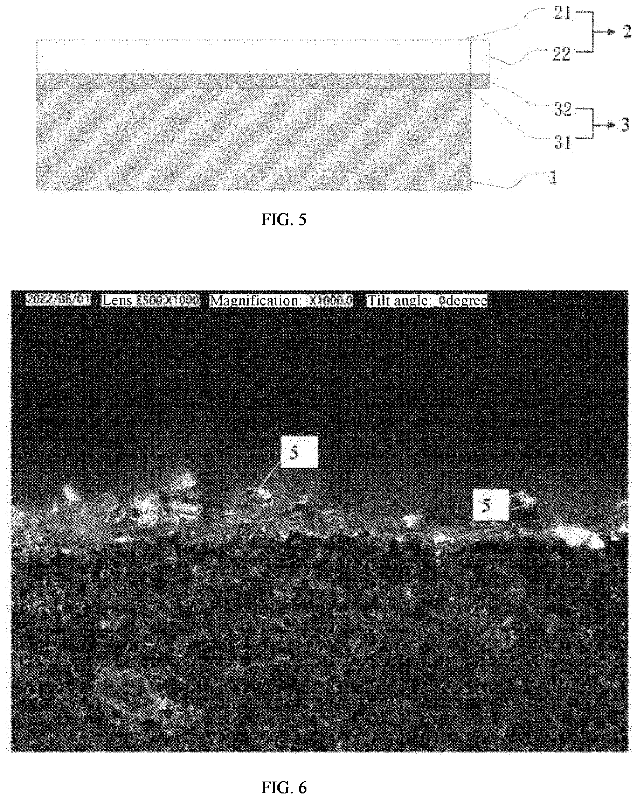

FIG. 5 is a schematic structure diagram of an electrode piece in a second embodiment of the present application. As shown in FIG. 5, in some embodiments of the present application, a second insulating layer 3 is further included, and at least part of the second insulating layer 3 is arranged on at least part of the surface of the active layer 1 away from the current collector.

It can be understood that at least part of the second insulating layer 3 can be arranged on any surface of the active layer 1 away from the current collector. In a specific embodiment, the second insulating layer 3 is arranged close to the first insulating layer 2.

Further, when the thickness of the first insulating layer 2 is greater than the thickness of the active layer 1, the second insulating layer 3 and the first insulating layer 2 are connected to each other.

It can be understood that the shape of the second insulating layer 3 can be regular or irregular.

In the present application, at least part of the second insulating layer 3 is arranged on at least part of the surface of the active layer 1 away from the current collector, which can better prevent the active layer 1 and/or the current collector from contacting with the electrode piece with opposite electrical properties and causing a short circuit, thereby improving the safety performance of the battery. In particular, when the thickness of the first insulating layer 2 is greater than the thickness of the active layer 1, the second insulating layer 3 is connected to the first insulating layer 2, which can prevent the appearance of non-coated foil between the first insulating layer 2 and the active layer 1 and further better prevent the active layer 1 and/or the current collector from contacting with an electrode piece with opposite electrical properties and causing a short circuit, thereby improving the safety performance of the battery.

As shown in FIG. 5, in some embodiments of the present application, the second insulating layer 3 includes a second insulating main part 31 and a second extension part 32;
the second insulating main part 31 covers the active layer 1, and the second extension part 32 extends from at least part of the end surface of the second insulating main part 31 as a start and protrudes from the current collector.

It can be understood that the edge of the third orthographic projection of the second insulating main part 31 on the surface of the active layer 1 extending along the first direction coincides with the edge of the active layer 1 along the first direction; the second extension part 32 is connected to an edge of the second insulating main part 31 extending along the first direction, and starting from the edge of the second insulating main component 31 extending along the first direction, extends in a direction away from the current collector.

In the present application, the second insulating layer 3 may be a ceramic insulating layer commonly used in the art, the second insulating main part 31 may be composed of conventional ceramics, and the second extension part 32 may include at least one of alumina, boehmite and graphite. The materials of the first insulating layer 2 and the second insulating layer 3 may be the same or different, and the materials of the first extension part 22 and the second extension part 32 may be the same or different.

The electrode piece of the present application also includes the second insulating layer 3, which also has the second extension part 32 protruding from the current collector. During the preparation of the battery, the second extension part 32 works together with the first extension part 22 to reserve a space at the edge of the current collector to prevent the edge of the current collector from contacting with and damaging other components, thereby further avoiding the occurrence of battery short circuits caused by damage to other components, and improving the safety of the battery.

In some embodiments of the present application, in the second direction, a size of each first extension part 22 is 5-100µm; and/or,
in the second direction, a size of each second extension part 32 is 5-100µm.

It can be understood that in the present application, the first extension part 22 and/or the second extension part 32 may be of a regular shape or an irregular shape. The size of the first extension part 22 in the second direction refers to the maximum size of the first extension part 22 extending in a direction away from the current collector, starting from the edge of the first insulating main part 21; the size of the second extension part 32 in the second direction refers to the maximum size of the second extension part 32 extending in a direction away from the current collector, starting from the edge of the second insulating main part 31.

In the present application, when the size of any first extension part 22 and/or second extension part 32 in the second direction meets 5-100 µm, sufficient space may be reserved at the edge of the current collector while increasing the volumetric energy density of the battery, thereby improving the safety performance of the battery.

In some embodiments of the present application, when the first extension part 22 covers at least part of the end surface of the current collector, the end surface of the current collector can be better protected to prevent the edge of the current collector from contacting with and damaging other components, thereby further avoiding the phenomenon of battery short circuit caused by damage to other components and improving the safety of the battery.

In particular, when the first insulating layers 2 are arranged on both surfaces of the current collector and the first extension parts 22 of the two first insulating layers 2 are connected to each other, the first extension part 22 completely covers the end surface of the current collector in its thickness direction, which can better improve the safety of the battery.

In some embodiments of the present application, when the second extension part 32 covers at least part of the end surface of the active layer 1 and/or the current collector, it is possible to better protect the end surface of the current collector, and prevent the edge of the current collector from contacting with other components and damaging other components, thereby further avoiding the occurrence of battery short circuits caused by damage to other components, and improving the safety of the battery.

In particular, the active layers 1 are arranged on both surfaces of the current collector respectively, and the second insulating layers 3 are provided on the surfaces of the active layers 1 on both surfaces away from the current collector respectively. When the second extension parts 32 of the two second insulating layers 3 are connected to each other, the second extension parts 32 completely cover the end faces of the active layer 1 and the current collector in the thickness direction, which can better improve the safety of the battery.

FIG. 6 is an SEM image of an electrode piece in the second embodiment of the present application. As shown in FIG. 6, in some embodiments of the present application, in the second direction, at least part of the end surface of the current collector has spherical and/or spheroidal-like molten beads 5.

In the present application, in the second direction, at least part of the end surface of the current collector has spherical and/or spheroidal-like molten beads 5, which will not puncture other components even when the current collector contacts with other components, thereby further improving the safety performance of the battery.

It can be understood that during the cutting process, the laser beam irradiates the surface of the electrode piece, and the energy generated causes the surface of the work piece to vaporize or melt, thereby realizing the cutting process. At the same time, during the cutting process, the energy generated by the laser beam will cause the end face of the current collector to melt, thereby forming the molten bead 5.

As can be seen from FIG. 6, in some embodiments of the present application, the particle size of the molten bead 5 is 10-20µm.

In the present application, the particle size of the molten bead 5 refers to the average diameter of the molten beads. When the particle size of spherical particles and/or spherical-like particles is 10-20µm, it is possible to further improve the safety performance of the battery while saving energy consumption.

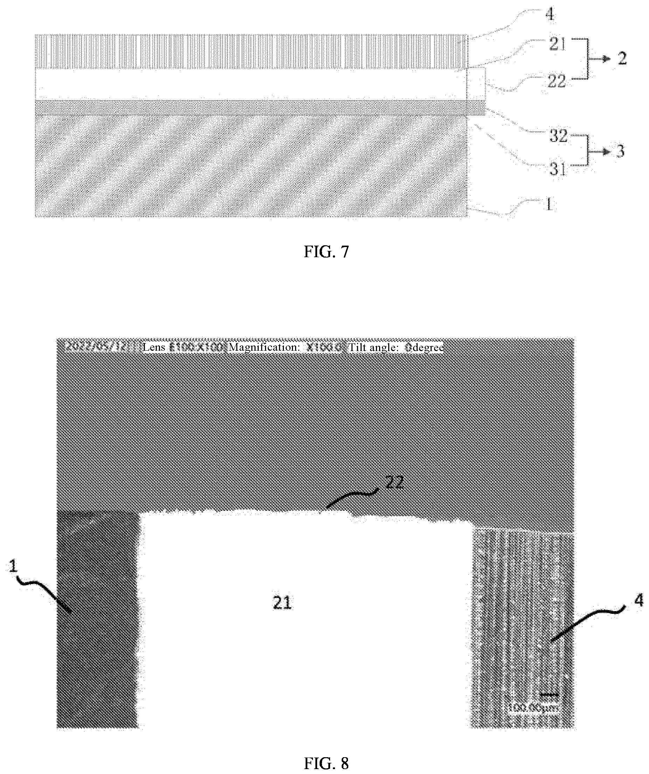

FIG. 7 is a schematic structure diagram of an electrode piece in a fourth embodiment of the present application; FIG. 8 is an SEM image of an electrode piece in a fourth embodiment of the present application. As shown in FIG. 7 or FIG. 8, in some embodiments of the present application, the surface of the current collector further includes a tab area 4, and the tab area 4 is configured to set a tab;
in the first direction, the tab area 4 and the second functional area are connected to each other.

It can be understood that in the present application, in the first direction, the surface of the current collector includes a first functional area, a second functional area and a tab area 4, that are connected to each other. The tab area 4 is configured to set the tab, and the tab is configured to connect to the external circuit.

The present application does not specifically limit the sizes of the tab, the first insulating main part 21 and the active layer 1. In some embodiments, the second edge of the first insulating main part 21 extending in the second direction has the same size as the first edge of the active layer 1 extending in the second direction, and the second edge coincides with the first edge;
the fourth edge of the first insulating main part 21 extending in the second direction has the same size as the third edge of the tab extending in the second direction, and the fourth edge coincides with the third edge.

In the present application, the first insulating main part 21 can be regular or irregular. The first insulating main part 21 extends in the second direction and has two sides arranged opposite to each other, one of the two sides having the same size as the active layer 1 and the other having the same size as the tab. It can be understood that in the second direction, the end surface of the tab also has a first extension part 22, and in the first direction, the edge of the first insulating main part 21 also has a first extension part 22.

In some embodiments of the present application, the size of the second edge of the first insulating main part 21 extending in the second direction is smaller than the size of the first edge of the active layer 1 extending in the second direction, and the second edge coincides with the first edge;
the fourth edge of the first insulating main part 21 extending in the second direction has the same size as the third edge of the tab extending in the second direction, and the fourth edge coincides with the third edge.

It can be understood that the first insulating main part 21 extends in the second direction and has two sides that are opposite to each other, one of the two sides being smaller than the active layer 1 in the size, and the other being the same as the tab in the size. It can be understood that in the second direction, the end surface of the tab also has a first extension part 22; and in the first direction, the edge of the first insulating main part 21 also has a first extension part 22.

In the present application, the above-mentioned electrode piece can be obtained by the following method: cutting the first insulating layer 2 with laser along the second direction, and then cutting the first insulating layer 2 and the tab area along any direction having an included angle with the second direction to form the above-mentioned electrode piece. Among them, along the laser cutting path, there is a first extension part 22 protruding from the second functional area at the edge of the first insulating layer 2. The first extension part 22 can better improve the safety performance of the electrode piece, especially the first extension part 22 also exists around the tab, which can better protect the tab and improve the safety performance of the electrode piece.

The size of the edge of the first insulating main part 21 adjacent to the active layer 1 can be adjusted by controlling the position of the laser cutting starting point. For example, in the first direction, if the distance between the cutting starting point and the edge of the active layer close to the first insulating layer 2 is zero, the edge of the first insulating main part 21 adjacent to the active layer 1 is smaller than the size of the active layer 1; in the first direction, if the distance between the cutting starting point and the edge of the active layer 1 close to the first insulating layer 2 is greater than zero, the edge of the first insulating main part 21 adjacent to the active layer 1 is equal to the size of the active layer 1.

In the present application, when the size of the edge of the first insulating main part 21 adjacent to the active layer 1 is smaller than the size of the active layer 1, the safety performance of the battery can be improved while increasing the mass energy density of the battery.

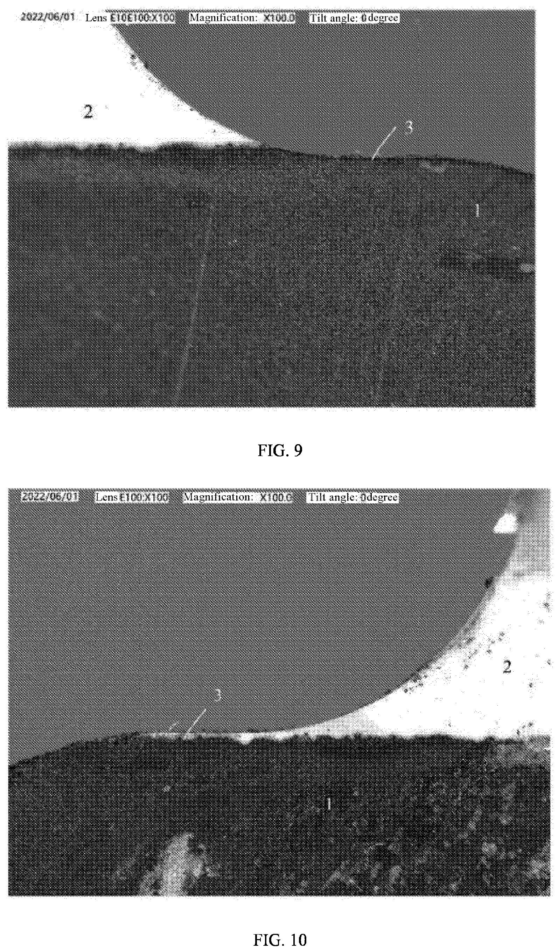

FIG. 9 is an SEM image at the tab of the electrode piece of the present application at a first viewing angle; FIG. 10 is an SEM image at the tab of the electrode piece of the present application at a second viewing angle. It can be seen from FIG. 9 or FIG. 10, the electrode piece includes a first insulating layer 2, a second insulating layer 3 and an active layer 1. In the first direction of the electrode piece, the electrode piece includes an active layer 1 and a first insulating layer 2 that are connected to each other in sequence; the second insulating layer 3 is arranged close to the first insulating layer 2 and covers a portion of the surface of the active layer 1; the size of the second edge of the first insulating main part 21 of the first insulating layer 2 extending in the second direction is smaller than the size of the first edge of the active layer 1 extending in the second direction, and the second edge coincides with the first edge.

A second aspect of the present application provides a battery, which includes the above-mentioned electrode piece.

The battery of the present application includes the above-mentioned electrode piece, so the positive electrode piece and the negative electrode piece are not easy to contact and cause a short circuit, and have excellent safety performance.

It should be noted that the numerical values and numerical ranges involved in the description of this application are approximate values. Due to the influence of manufacturing process and measurement accuracy, there may be a certain range of errors, which may be considered negligible by those skilled in the art.

In the description of the present application, it should be understood that the terms "top", "bottom", "upper", "lower" (if any), etc., indicating orientations or positional relationships are based on the orientations or positional relationships shown in the accompanying drawings, and are only for the convenience of describing the present application and simplifying the description, and do not indicate or imply that the device or element referred to must have a specific orientation, be constructed and operated in a specific orientation, and therefore cannot be understood as a limitation on the present application.

In the description of the present application, it should be noted that, unless otherwise clearly specified and limited, the terms "installed", "connected" and "connection" should be understood in a broad sense. For example, it can be a fixed connection, a detachable connection, or an integral connection; it can be a mechanical connection or an electrical connection; it can be a direct connection or an indirect connection through an intermediate medium, and it can be the internal communication of two elements. For those skilled in the art, the specific meanings of the above terms in this application can be understood based on specific circumstances.

Finally, it should be noted that the above embodiments are only used to illustrate the technical solutions of the present application, rather than limiting it. Although the present application has been described in detail with reference to the aforementioned embodiments, those skilled in the art should understand that they can still modify the technical solutions described in the aforementioned embodiments, or replace some or all of the technical features therein with equivalents. However, these modifications or replacements do not cause the essence of the corresponding technical solutions to deviate from the scope of the technical solutions of the embodiments of the present application.

## Claims

1. An electrode piece, comprising a current collector, an active layer and a first insulating layer, wherein the first insulating layer comprises a first insulating main part and a first extension part;
in a first direction of the electrode piece, each surface of the current collector comprises a first functional area and a second functional area connected to each other, the active layer covers the first functional area, and the first insulating main part covers the second functional area;
in a second direction of the electrode piece, the first extension part extends from at least part of an end surface of the first insulating main part as a start and protrudes from the second functional area, the second direction and the first direction being perpendicular to each other.

2. The electrode piece according to claim 1, further comprising a second insulating layer, wherein at least part of the second insulating layer is arranged on at least part of a surface of the active layer away from the current collector.

3. The electrode piece according to claim 2, wherein the second insulating layer comprises a second insulating main part and a second extension part;
the second insulating main part covers the active layer, and the second extension part extends from at least part of an end surface of the second insulating main part as a start and protrudes from the current collector.

4. The electrode piece according to claim 3, wherein in the second direction, a size of each first extension part is 5-100µm; and/or
in the second direction, a size of each second extension part is 5-100µm.

5. The electrode piece according to any one of claims 1-4, wherein the first extension part covers at least part of an end surface of the current collector.

6. The electrode piece according to any one of claims 1-5, wherein, two surfaces of the current collector are each provided with the first insulating layer, and first extension parts of two first insulating layers are connected to each other.

7. The electrode piece according to claim 3 or 4, wherein the second extension part covers at least part of an end surface of the active layer and/or the current collector.

8. The electrode piece according to claim 7, wherein two surfaces of the current collector are each provided with the active layer, surfaces of two surface active layers away from the current collector are each provided with the second insulating layer, and second extension parts of two second insulating layers are connected to each other.

9. The electrode piece according to any one of claims 1-8, wherein in the second direction, at least part of an end surface of the current collector has a molten bead.

10. The electrode piece according to claim 9, wherein a particle size of the molten bead is 10-20µm.

11. The electrode piece according to any one of claims 1-10, wherein the surface of the current collector further comprises a tab area for setting a tab;
in the first direction, the tab area and the second functional area are connected to each other.

12. The electrode piece according to claim 11, wherein a second edge of the first insulating main part extending in the second direction has the same size as a first edge of the active layer extending in the second direction, and the second edge coincides with the first edge;
a fourth edge of the first insulating main part extending in the second direction has the same size as a third edge of the tab extending in the second direction, and the fourth edge coincides with the third edge.

13. The electrode piece according to claim 11, wherein a size of the second edge of the first insulating main part extending in the second direction is smaller than a size of the first edge of the active layer extending in the second direction, and the second edge coincides with the first edge;
a fourth edge of the first insulating main part extending in the second direction has the same size as a third edge of the tab extending in the second direction, and the fourth edge coincides with the third edge.

14. A battery, comprising the electrode piece according to any one of claims 1-13.
